# EUROPÄISCHE PATENTSCHRIFT

(11) **EP 2 196 281 B1**
(45) Veröffentlichungstag und Bekanntmachung des Hinweises auf die Patenterteilung: **16.07.2014**
(21) Anmeldenummer: 08021543.7
(22) Anmeldetag: 11.12.2008
(51) Int. Cl.: B23P 15/00, F16D 23/02, B21D 53/16

(54) **Verfahren zur Herstellung eines Außensynchronrings**
Method for manufacturing an external synchronizing ring
Procédé de fabrication d'un anneau de synchronisation extérieur

(43) Veröffentlichungstag der Anmeldung: 16.06.2010
(73) Patentinhaber: Hoerbiger Antriebstechnik GmbH, 86956 Schongau (DE)
(72) Erfinder: Echtler, Peter, 86956 Schongau (DE); Fürguth, Werner, 87640 Biessenhofen/Altdorf (DE)
(74) Vertreter: Kitzhofer, Thomas

(56) Entgegenhaltungen:
- EP-A1- 1 722 122
- EP-A2- 0 790 426
- EP-A2- 1 571 361
- AT-B- 410 015
- DE-A1- 3 609 879
- DE-U1-202005 012 025
- FR-A- 2 787 536
- GB-A- 1 346 334
- JP-A- 9 176 817
- KR-B1- 100 834 118
- US-A- 5 143 192

## Beschreibung

Die Erfindung betrifft ein Verfahren zur Herstellung eines Außensynchronrings gemäß Anspruch 1.

Außensynchronringe, die mit einem Reibbelag bzw. einer Reibfläche versehen sind, werden üblicherweise gesintert, geschmiedet oder aus Blech umgeformt. In einem darauffolgenden Arbeitsschritt wird die Reibfläche bearbeitet und/oder ein metallischer, organischer bzw. karbonhaltiger Reibbelag stoffschlüssig oder formschlüssig eingebracht. Das Einbringen einer metallischen Reibfläche mittels galvanischen oder thermischen Verfahren ist ebenfalls bekannt.

Ein Beispiel für eine stoffschlüssige Verbindung von Sinterreibbelag und Reibfläche bei einem Außensynchronring ist in der WO 2006/119974 A1 offenbart.

Das Fügen einer Reibbelagsfolie auf einen kegelstumpfförmigen Basiskörper stellt einen aufwendigen Prozess dar. Besonders das Vorfixieren der Belagabwicklung bzw. der Belagsegmente in dem Konusring sowie das maßhaltige Verpressen lassen sich nur mit relativ großem Aufwand bewerkstelligen.

Die AT 410 015 B offenbart Verfahrensvarianten zur Herstellung eines Reibrings, insbesondere für Synchronisiereinrichtungen von Zahnradwechselgetrieben, bei denen der Reibring einen ringförmigen Basiskörper aus Metall aufweist, der an seinem Außenumfang mit einer Verzahnung und Mitnehmernocken versehen sein kann und wenigstens eine ebene, konische oder zylindrische Trägerfläche aufweist, auf der ein Reibbelag befestigt ist. Zur Fertigstellung des Reibrings wird eine ringförmige, ebene Platine als Trägerblech hergestellt, z.B. ausgestanzt, und mit einem Reibbelag versehen. Der Reibbelag wird dann in über seine Oberfläche verteilten Flächenbereichen unterschiedlich verdichtet und schließlich zusammen mit der Platine in eine gewünschte Form gebracht und auf der Trägerfläche des Basiskörpers befestigt. Aufgrund seines zweiteiligen Aufbaus umfassend einen Außenring (Basiskörper) mit Verzahnung und einen Innenring (Platine) mit Reibbelag erscheint die Herstellung eines solchen Reibrings recht aufwendig.

Die US 5,143,192 A beschreibt einen Synchronring für eine Reibkupplung, der einen ähnlichen zweiteiligen Aufbau aufweist.

In der AT 410 015 B ist außerdem noch eine Verfahrensvariante zur Herstellung eines Reibrings angedeutet, bei der die Trägerfläche des Basiskörpers zunächst eben ist, im ebenen Zustand unmittelbar mit einem Streusinter-Reibbelag versehen und anschließend gemeinsam mit diesem, z.B. durch Prägen oder Tiefziehen, in eine gewünschte Form gebracht wird.

Es ist Aufgabe der vorliegenden Erfindung, ein Verfahren zur Herstellung eines Außensynchronrings zu schaffen, das eine wirtschaftliche Alternative zu den bekannten Verfahren darstellt und das eine technische Qualitätssteigerung für die Herstellung von konischen Außensynchronringen mit Reibbelag ermöglicht.

Die Lösung dieser Aufgabe erfolgt durch die Merkmale des Anspruches 1.

Dadurch, dass zunächst eine Platine vorgestanzt wird, die im ebenen Zustand mit einem Streusinterreibbelag beschichtet wird und in einem nachfolgenden Prozess in mehreren Stufen zusammen mit dem Streusinterbelag zu einem fertigen konischen Außensynchronring umgeformt wird, ergibt sich der Vorteil, dass der metallische Reibbelag bereits vor dem Umformprozess auf die zur endgültigen Herstellung des Außensynchronrings vorgesehene Platine aufgebracht wird, so dass der nachfolgende aufwendige Klebe-Beschichtungsprozess des konusförmigen Körpers entfällt. Eine Qualitätssteigerung ist durch die höhere Festigkeit der Streusinter-Stahl-Verbindung gegenüber einer Klebeverbindung gegeben. Durch das beschriebene Umformverfahren kann trotz hohem Umformgrad eine funktions- und leistungsfähige Reibschicht erzeugt werden.

Es ist zwar aus der DE 36 09 879 A1 bereits bekannt, einen Reibring für Kupplungen durch das Umformen eines zuvor beschichteten ebenen Ringkörpers herzustellen, jedoch betrifft dieses Verfahren das Herstellen von Reibringen ohne Außenverzahnung, wofür das aus der DE 36 09 879 A1 bekannte Verfahren bisher für ungeeignet gehalten wurde, da verhindert werden muss, dass der für die Verzahnung vorgesehene Bereich der ebenen Platine besintert wird. Dieses Problem löst das erfindungsgemäße Verfahren jedoch dadurch, dass die ebene Platine in einen äußeren ringförmigen ersten Flächenbereich und einen inneren ringförmigen zweiten Flächenbereich unterteilt wird, wobei der äußere ringförmige Bereich während des Besinterungsschrittes abgedeckt wird, so dass auf überraschend einfache Art und Weise das Problem des Freihaltens des für die Verzahnung vorgesehenen Bereiches von einer Besinterung gelöst wird.

Die Unteransprüche haben vorteilhafte Weiterbildungen der Erfindung zum Inhalt.

Weitere Einzelheiten, Vorteile und Merkmale der vorliegenden Erfindung ergeben sich aus nachfolgender Beschreibung eines Ausführungsbeispiels anhand der Zeichnung. Es zeigt:
- Fig. 1: eine vorgestanzte ebene Platine zur Herstellung eines Außensynchronrings, und
- Fig. 2: den gemäß dem erfindungsgemäßen Verfahren hergestellten Außensynchronring.

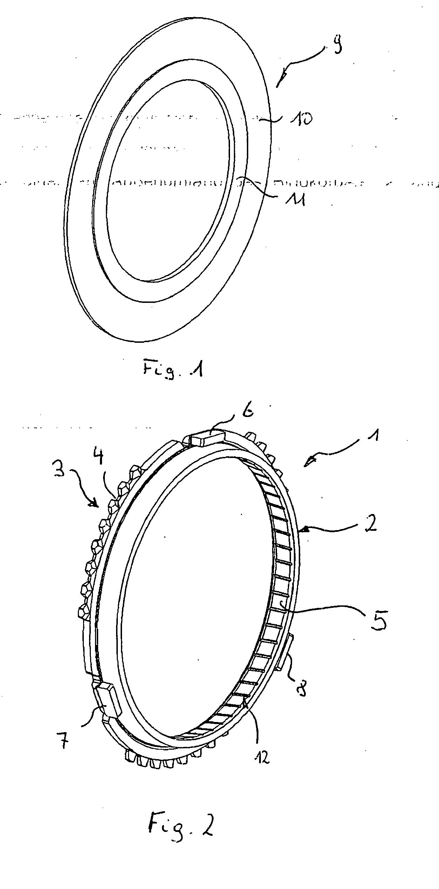

In Fig. 1 ist eine vorgestanzte ebene Platine 9 dargestellt, die einen äußeren ringförmigen ersten Flächenbereich 10 und einen inneren zweiten ringförmigen Flächenbereich 11 aufweist. Der äußere Flächenbereich 10 ist hierbei für die Ausbildung der in Fig. 2 sichtbaren Außenverzahnung 3 mit Dachschrägen 4 und von Indexlappen 6, 7, 8 vorgesehen, die am Außenumfang eines konusförmigen Ringkörpers 2 eines Außensynchronrings 1 angeordnet sind, wie sich dies im Einzelnen aus Fig. 2 ergibt. Der Ringkörper 2 ist mit einem Streusinterbelag 5 versehen, der, wie in Fig. 2 dargestellt, gegebenenfalls mit einer Rillierung 12 versehen sein kann.

Der innere Flächenbereich 11 ist der Flächenbereich, der gemäß Fig. 2 mit dem Streusinterbelag 5 versehen wird, und der in die aus Fig. 2 ersichtliche konische Form umgeformt wird.

Nach dem Vorstanzen der ebenen Platine 9 wird dementsprechend der äußere ringförmige erste Flächenbereich 10 des Ringkörpers 2 abgedeckt. Der nicht abgedeckte innere ringförmige Flächenbereich 11 wird besintert und nach der Besinterung wird dieser Flächenbereich 11 in die aus Fig. 2 ersichtliche konische Form umgeformt, wobei zuvor üblicherweise die Abdeckung des äußeren Flächenbereiches 10 entfernt wird, was aber nicht unbedingt erforderlich ist.

Gegebenenfalls wird der konusförmige Bereich mit dem Streusinterbelag 5 (mit oder ohne Rillierung) durch Verwendung eines geeigneten Stempels kalibriert und ferner kann ein Zentrierbund angeschoben werden, falls dies notwendig ist. Diese zwei zuletzt genannten Schritte sind jedoch nicht unbedingt nötig.

Zur Vervollständigung des Außensynchronrings 1 wird sodann die Außenverzahnung 3 vorgestanzt und die Dachschrägen 4 werden geprägt. Danach wird die Außenverzahnung 3 fertiggestanzt und die Indexlappen 6, 7, 8, wie aus Fig. 2 ersichtlich, werden umgebogen. Optional können die Indexlappen kalibriert werden.

Ferner kann bevorzugterweise die Höhe des zweiten Flächenbereichs 11 gesetzt werden, wozu zur Einstellung der gewünschten Höhe der in die Konusform umgeformte zweite Flächenbereich 11 gestaucht wird.

Das Umformen in die Konusform kann auch in zwei Schritten erfolgen. Bei dieser Variante wird der zweite Flächenbereich 11 nach der Besinterung zuerst in eine Zylinderform umgeformt und anschließend in die konische Endform verformt.

Neben der voranstehenden schriftlichen Offenbarung wird hiermit explizit auf deren zeichnerische Darstellung in den Fig. 1 und 2 verwiesen.

### Bezugszeichenliste

- 1: Außensynchronring
- 2: Konusförmiger Ringkörper
- 3: Außenverzahnung
- 4: Dachschrägen
- 5: Streusinterbelag
- 6,7,8: Indexlappen
- 9: Ebene Platine
- 10: Erster Flächenbereich
- 11: Zweiter Flächenbereich
- 12: Rillierung

## Patentansprüche

1. Verfahren zur Herstellung eines Außensynchronrings (1), der einen konusförmigen Ringkörper (2) mit folgenden Merkmalen aufweist:
• eine mit Dachschrägen (4) versehene Außenverzahnung (3);
• einen konusförmigen Streusinterbelag (5), und
• zumindest einen am Außenumfang des Ringkörpers (2) angeordneten Indexlappen (6, 7, 8),
**gekennzeichnet durch** folgende Verfahrensschritte:
- Vorstanzen einer ebenen Platine (9);
- Abdecken eines äußeren ringförmigen ersten Flächenbereichs (10) des Ringkörpers (2);
- Besintem eines inneren ringförmigen zweiten Flächenbereichs (11) des Ringkörpers (2) zur Bildung des Streusinterbelags (5);
- Umformen des besinterten inneren zweiten Flächenbereichs (11) in eine konische Form;
- Vorstanzen der Außenverzahnung (3);
- Prägen der Dachschrägen (4);
- Fertigstanzen der Außenverzahnung (3); und
- Biegen der Indexlappen (6, 7, 8).

2. Verfahren nach Anspruch 1, **dadurch gekennzeichnet, dass** der konische, mit dem Streusinterbelag (5) versehene Flächenbereich (11) kalibriert wird.

3. Verfahren nach Anspruch 1 oder 2, **dadurch gekennzeichnet, dass** die Höhe des konischen mit dem Streusinterbelag (5) versehenen Flächenbereichs (11) durch einen Stauchvorgang eingestellt wird.

4. Verfahren nach einem der Ansprüche 1 bis 3, **dadurch gekennzeichnet, dass** nach dem Umformen des zweiten Flächenbereichs (11) in die konische Form zumindest ein Zentrierbund angeschoben wird.

5. Verfahren nach einem der Ansprüche 1 bis 4, **dadurch gekennzeichnet, dass** der Indexlappen (6, 7, 8) kalibriert wird.

6. Verfahren nach einem der Ansprüche 1 bis 5, **dadurch gekennzeichnet, dass** der innere ringförmige zweite Flächenbereich (11) nach der Besinterung zuerst in eine zylindrische Form und anschließend in eine konische Form umgeformt wird.

## Claims

1. A method of producing an external synchronizer ring (1) which comprises a conical annular body (2) having the following features:
• an external toothing (3) provided with roof slopes (4),
• a conical scatter-sintered lining (5), and
• at least one index tab (6, 7, 8) arranged on the outer periphery of the annular body (2),
**characterized by** the following method steps:
- pre-stamping a plane sheet bar (9);
- covering an outer annular first surface area (10) of the annular body (2);
- sintering an inner annular second surface area (11) of the annular body (2) to form the scatter-sintered lining (5);
- reshaping the sintered inner second surface area (11) so as to obtain a conical form;
- pre-stamping the external toothing (3);
- embossing the roof slopes (4);
- finishing stamping the external toothing (3); and
- bending the index tabs (6, 7, 8).

2. The method according to claim 1, **characterized in that** the conical surface area (11) which is provided with the scatter-sintered lining (5) is calibrated.

3. The method according to claim 1 or 2, **characterized in that** the height of the conical surface area (11) which is provided with the scatter-sintered lining (5) is adjusted by an upsetting operation.

4. The method according to any of claims 1 to 3, **characterized in that** after the reshaping of the second surface area (11) so as to obtain the conical form, at least one centering collar is wringed.

5. The method according to any of claims 1 to 4, **characterized in that** the index tab (6, 7, 8) is calibrated.

6. The method according to any of claims 1 to 5, **characterized in that** after the sintering, the inner annular second surface area (11) is first reshaped so as to obtain a cylindrical form and then so as to obtain a conical form.

## Revendications

1. Procédé de fabrication d'une bague de synchronisation extérieure (1) qui comporte un corps annulaire conique (2) présentant les caractéristiques suivantes :
• une denture extérieure (3) pourvue de pans (4),
• un revêtement fritté par dispersion conique (5), et
• au moins une patte d'indexage (6, 7, 8) agencée sur la périphérie extérieure du corps annulaire (2),
**caractérisé par** les étapes de procédé suivantes :
- pré-découpage d'un disque plat (9) ;
- recouvrement d'une première zone de surface (10) annulaire extérieure du corps annulaire (2) ;
- frittage d'une deuxième zone de surface (11) annulaire intérieure du corps annulaire (2) pour réaliser le revêtement fritté par dispersion (5) ;
- mise en forme de la deuxième zone de surface (11) intérieure frittée de manière à obtenir une forme conique ;
- pré-découpage de la denture extérieure (3) ;
- estampage des pans (4) ;
- achèvement du découpage de la denture extérieure (3) ; et
- pliage des pattes d'indexage (6, 7, 8).

2. Procédé selon la revendication 1, **caractérisé en ce que** la zone de surface conique (11) pourvue du revêtement fritté par dispersion (5) est calibrée.

3. Procédé selon la revendication 1 ou 2, **caractérisé en ce que** la hauteur de la zone de surface conique (11) pourvue du revêtement fritté par dispersion (5) est ajustée par une opération de refoulement.

4. Procédé selon l'une des revendications 1 à 3, **caractérisé en ce qu'**après la mise en forme de la deuxième zone de surface (11) de manière à obtenir la forme conique, au moins un collet de centrage est accolé.

5. Procédé selon l'une des revendications 1 à 4, **caractérisé en ce que** les pattes d'indexage (6, 7, 8) sont calibrées.

6. Procédé selon l'une des revendications 1 à 5, **caractérisé en ce qu'**après le frittage, la deuxième zone de surface (11) annulaire intérieure est tout d'abord mise en forme de manière à obtenir une forme cylindrique et est ensuite de manière à obtenir une forme conique.
